# EUROPÄISCHE PATENTANMELDUNG

(11) **EP 4 524 560 A1**
(43) Veröffentlichungstag der Anmeldung: **19.03.2025**
(21) Anmeldenummer: 23197442.9
(22) Anmeldetag: 14.09.2023
(51) Int. Cl.: G01N 30/86

(54) **BETRIEBSVERFAHREN FÜR EINE GASANALYSEVORRICHTUNG MIT DATENGESTÜTZTER DEGRATIONSERKENNUNG**

(71) Anmelder: Siemens Aktiengesellschaft, 80333 München (DE)
(72) Erfinder: Strauch, Piotr, 76761 Rülzheim (DE)
(74) Vertreter: Siemens Patent Attorneys

(57) **Zusammenfassung**

Die Erfindung betrifft ein Betriebsverfahren (100) für eine Gasanalysevorrichtung (10), die eine Trennvorrichtung (12) zum Trennen einer zugeführten Stoffprobe (15) aufweist. Das Betriebsverfahren (100) umfasst einen ersten Schritt (110), in dem die Gasanalysevorrichtung (10), auf der ein Messbetrieb abläuft, bereitgestellt wird. In einem zweiten Schritt (120) erfolgt ein Erfassen eines Trennverhaltens der Trennvorrichtung (12) und ein Erfassen zumindest eines ersten Trennleistungsparameters (36, 37) für zumindest eine erste Komponente (21) der Stoffprobe (15). In einem dritten Schritt (130) erfolgt ein Erkennen eines bestimmungswidrigen Betriebszustands der Trennvorrichtung (12), wenn eine Differenz (48) dem ersten Trennleistungsparameter (36, 37) und dem ersten Referenzwert (38, 39) einen einstellbaren ersten Schwellenwert (49) betragsmäßig übersteigt oder unterschreitet. Weiter gehört ein vierter Schritt (140) zum Betriebsverfahren (100), in dem eine selbsttätigen Reinigung der Trennvorrichtung (12) eingeleitet wird und/oder eine Warnung (47) ausgegeben wird, wenn im dritten Schritt (130) ein bestimmungswidriger Betriebszustand erkannt wird. Die Erfindung betrifft ebenso ein entsprechendes Computerprogrammprodukt (50) und eine geeignete Steuereinheit (40). Ebenso betrifft die Erfindung eine Gasanalysevorrichtung (10), ein Simulationsverfahren (200) und ein zugehöriges Simulationsprogrammprodukt (60) .

## Beschreibung

Die Erfindung betrifft ein Betriebsverfahren für eine Gasanalysevorrichtung und ein Computerprogrammprodukt, mit dem das Betriebsverfahren umsetzbar ist. Weiter betrifft die Erfindung eine entsprechende Steuereinheit und eine Gasanalysevorrichtung, auf der das Betriebsverfahren umsetzbar ist. Ebenso betrifft die Erfindung ein Simulationsverfahren und ein entsprechendes Simulationsprogrammprodukt.

Aus der Patentschrift US 4,414,832 B1 ist eine Mikro-Gaschromatograph bekannt, der eine Trennsäule aufweist, in der ein Draht angeordnet ist und die beheizbar ist. Der Draht gehört zu einem Temperaturmesssystem, das in ein Regelsystem eingebunden ist zum Einstellen einer Temperatur in der Trennsäule.

Gasanalysevorrichtungen werden in unterschiedlichen Anwendungen in Industrie und Forschung eingesetzt, um eine Zusammensetzung einer Stoffprobe präzise zu bestimmen. Insbesondere bei Trennvorrichtungen wie Trennsäulen können im Betrieb Degradationserscheinungen auftreten, beispielsweise eine Verunreinigung, durch die die erzielbare Messgenauigkeit reduziert wird. Das Erkennen solcher Degradationserscheinungen und das Einleiten geeigneter Gegenmaßnahmen erfordert besonders sachkundige und geübte Benutzer. Weiter sind derartige Gegenmaßnahmen zeitaufwendig und erfordern die Aufmerksamkeit des Benutzers. Der Erfindung liegt die Aufgabe zugrunde, eine hierfür geeignete zumindest teilweise automatische Lösung bereitzustellen.

Die Aufgabenstellung wird durch ein erfindungsgemäßes Betriebsverfahren für eine Gasanalysevorrichtung gelöst. Die Gasanalysevorrichtung, an der das Betriebsverfahren ausgeführt wird, weist zumindest eine Trennvorrichtung auf, die dazu ausgebildet ist, eine der Gasanalysevorrichtung zugeführte Stoffprobe in ihre Komponenten aufzutrennen. Die Trennvorrichtung kann beispielsweise als Trennsäule ausgebildet sein, die auf unterschiedliche Komponenten der Stoffprobe eine unterschiedlich starke Retentionswirkung ausübt. Das Betriebsverfahren umfasst einen ersten Schritt, in dem die Gasanalysevorrichtung bereitgestellt wird und mit dieser ein Messbetrieb durchgeführt wird. Während des Messbetriebs wird, beispielsweise mittels eines Detektors, der der Trennvorrichtung nachgeschaltet ist, die Zusammensetzung der zugeführten Stoffprobe ermittelt. Des Weiteren gehört ein zweiter Schritt zum Betriebsverfahren, in dem ein Trennverhalten der Trennvorrichtung erfasst wird. Im Zuge dessen wird zumindest ein erster Trennleistungsparameter für zumindest eine Komponente der Stoffprobe erfasst. Der Trennleistungsparameter kann hierbei jegliche Größe sein, die beispielsweise durch den Detektor erfassbar ist, und die ein Maß für eine Retentionswirkung auf die entsprechende Komponente der Stoffprobe darstellt. Der erste Trennleistungsparameter der ersten Komponente kann unabhängig von weiteren Komponenten der Stoffprobe ermittelt werden oder in Abhängigkeit von zumindest einer zweiten Komponente. Der zweite Schritt kann betriebsbegleitend zum Messbetrieb durchgeführt werden, beispielsweise einmal je Messdurchgang oder einmal je einer vorgegebenen Anzahl an Messdurchgängen. Alternativ oder ergänzend kann der zweite Schritt mittels einer Referenzstoffprobe durchgeführt werden, für die bei hinreichend geringer Kontamination ein vordefiniertes Trennverhalten zu erwarten ist.

Darüber hinaus umfasst das Betriebsverfahren einen dritten Schritt, in dem ein Vorliegen eines bestimmungswidriger Betriebszustands der Trennvorrichtung erkannt wird. Dazu wird eine Differenz zwischen dem im zweiten Schritt erfassten Trennleistungsparameter und einem zugehörigen ersten Referenzwert ermittelt. Ein bestimmungswidriger Betriebszustand wird erkannt, wenn die Differenz einen einstellbaren ersten Schwellenwert betragsmäßig übersteigt bzw. unterschreitet. Ob ein Übersteigen oder Unterschreiten des ersten Schwellenwerts einen bestimmungswidrigen Betriebszustand anzeigt, hängt davon ab, welche Größe der erste Trennleistungsparameter im Einzelnen ist. Der erste Referenzwert kann durch einen Benutzer, eine Wertetabelle, eine Kennlinie, ein Kennfeld und/oder eine Künstliche Intelligenz vorgegeben sein. Der erste Schwellenwert kann ebenso durch einen Benutzer, eine Wertetabelle, eine Kennlinie, ein Kennfeld und/oder eine Künstliche Intelligenz vorgegeben sein. Ferner wird in einem vierten Schritt eine Warnung ausgegeben, wenn im dritten Schritt ein bestimmungswidriger Betriebszustand erkannt wird. Alternativ oder ergänzend wird im vierten Schritt eine selbsttätige Reinigung der Trennvorrichtung eingeleitet. Die selbsttätige Reinigung kann ein Betriebsmodus der Gasanalysevorrichtung sein, in der kein Messbetrieb erfolgt. Die selbsttätige Reinigung kann unmittelbar nach dem Erkennen des bestimmungswidrigen Betriebszustands erfolgen oder nach einer vorgebbaren Verzögerungsdauer eingeleitet werden. Die Verzögerungsdauer kann durch den Benutzer oder durch die Künstliche Intelligenz vorgegeben werden, die dazu geeignet ist, Planungsdaten über einen geplanten Betrieb der Gasanalysevorrichtung auszuwerten.

Detektoren für Gasanalysevorrichtungen sind dazu geeignet, neben Messsignalen auch eine Vielzahl an Metadaten zu den Messsignalen zu erfassen und bereitzustellen. Ebenso sind Steuereinheiten von Gasanalysevorrichtungen, die auch als Auswertungseinheiten dienen, aus den Messsignalen Messdaten mit einer Vielzahl an Metadaten zu erzeugen. Die Erfindung beruht unter anderem auf der Erkenntnis, dass Trennleistungsparameter schnell erfassbar sind und schnell und einfach verarbeitbaren Größen darstellen, die aussagekräftig das Vorliegen eines bestimmungswidrigen Betriebszustands einer Gasanalysevorrichtung, insbesondere Trennvorrichtungen, anzeigen können. Ebenso ist über Trennleistungsparameter ein vorliegender Degradationsgrad und ein zu erwartender Degradationsfortschritt prognostizierbar. Ferner ist ausgehend von einem Trennleistungsparameter ein Geräteparametersatz optimierbar, durch den der Messbetrieb der Gasanalysevorrichtung vorgebbar ist. Hierdurch ist beispielsweise eine Betriebsdauer bis zur nächsten selbsttätigen Reinigung verlängerbar. Gleichermaßen ist basierend auf einem Trennleistungsparameter die selbsttätige Reinigung optimierbar. Darüber hinaus ist eine Mehrzahl an Größen dazu geeignet, als Trennleistungsparameter zu dienen. Dadurch ist für eine breite Spanne an Trennvorrichtungen ein besonders aussagekräftiger und präzise messbarer Trennleistungsparameter auswählbar. Folglich ist das das erfindungsgemäße Betriebsverfahren für eine Vielzahl an unterschiedlichen Trennvorrichtungen, und damit Gasanalysevorrichtungen geeignet. Ferner erlaubt eine solche Auswertung von Trennleistungsparametern ein frühzeitiges Erkennen eines bestimmungswidrigen Betriebszustands, was wiederum eine frühzeitige Gegenmaßnahme oder Warnung erlaubt. Hierdurch wird dauerhafter Betrieb der Gasanalysevorrichtung in einem bestimmungswidrigen Betriebszustand reduziert oder unterbunden.

Ein einer Ausführungsform des beanspruchten Betriebsverfahrens ist der erste Trennleistungsparameter eine erste Retentionszeit der ersten Komponente der Stoffprobe. Die Retentionszeit ist die Dauer von einem Bezugszeitpunkt, beispielsweise einem Einleiten der Stoffprobe in die Trennvorrichtung, und einem Auftreten eines ersten Peaks am Detektor, das durch die erste Stoffprobe ausgelöst ist. Bei einer Verunreinigung der Trennvorrichtung kann deren Retentionswirkung auf die erste Komponente reduziert sein. Dementsprechend durchläuft die erste Komponente die Trennvorrichtung schneller und weist eine gegenüber einem Referenzzustand, also einem Gut-Zustand, veränderte Retentionszeit auf. Dementsprechend kann der erste Referenzwert, anhand dessen der dritte Schritt durchgeführt wird, eine erste Referenz-Retentionszeit für die erste Komponente sein. Referenz-Retentionszeitn sind für Baureihen von Trennvorrichtungen in einfacher Weise anhand eines Referenzstücks für die gesamte Baureihe zuverlässige ermittelbar. Dadurch ist das beanspruchte Betriebsverfahren in einfacher Weise kosteneffizient implementierbar.

Im beanspruchten Betriebsverfahren kann der erste Trennleistungsparameter auch eine Trenndistanz zwischen der ersten Komponente der Stoffprobe und einer zweiten Komponente der Stoffprobe ausgebildet sein. Die Trenndistanz ist hierbei eine Distanz zwischen einem ersten Peak der ersten Komponente und einem zweiten Peak der zweiten Komponente in einem Chromatogramm, das durch den Detektor erzeugt wird. Die Trenndistanz stellt somit im Wesentlichen eine Zeitangabe dar. Je näher das erste und zweite Peak beieinander liegen, umso schwieriger ist eine exakte Auswertung dieser durchführbar. Der zugehörige erste Referenzwert kann beispielsweise als Mindest-Trenndistanz für das erste und zweite Peak sein. Die Trenndistanz ist auch ohne nähere Daten der Trennvorrichtung ermittelbar und ist damit geräteunabhängig. Durch Nutzung der Trenndistanz als ersten Trennleistungsparameter ist das beanspruchte Betriebsverfahren in einfacher Weise auf bestehende Gasanalysevorrichtungen implementierbar. Ferner ist die Mindest-Trenndistanz anhand von Daten des Detektors wählbar. Insbesondere ist die Mindest-Trenndistanz so vorgebbar, dass der erste und zweite Peak mindestens so weit beabstandet sind, dass die zugehörigen Detektorantworten, also die zugehörigen Kurven im Chromatogramm, hinreichend trennscharf sind. Dementsprechend werden Überlappungen der Detektorantworten vermieden. Folglich ist das beanspruchte Betriebsverfahren in vorteilhafter Weise an das Leistungsvermögen vorhandener Detektoren anpassbar. Vorzeitige, und damit unnötige, Warnungen oder selbsttätige Reinigungen sind so vermeidbar, und damit unproduktive Betriebszeiten der Gasanalysevorrichtung reduzierbar.

Des Weiteren kann der erste Trennleistungsparameter eine erste Peak-Breite für die erste Komponente sein. Unter der Peak-Breite ist eine Breite in einem Chromatogramm zu verstehen, also eine Abmessung einer Detektorantwort entlang der horizontalen Achse des Chromatogramms. Je höher eine Peak-Breite ist, umso heterogener ist die Retentionswirkung der Trennvorrichtung auf die entsprechende Komponente. Insbesondere werden unterschiedliche Partikel der zugehörigen Komponente durch die Retentionswirkung unterschiedlich stark beim Durchlaufen der Trennvorrichtung verzögert, was eine verbreiterte Detektorantwort hervorruft. Eine derartige erhöhte Peak-Breite zeigt folglich eine auftretende Degradation der Trennvorrichtung, beispielsweise durch Verunreinigung, dar. Peak-Breiten sind präzise erfassbar, so dass bereits geringfügige Degradationen zuverlässig erkennbar sind.

Des Weiteren kann die selbsttätige Reinigung, die im vierten Schritt durchführbar ist, ein Ausheizen und/oder ein Spülen der Trennvorrichtung mit einem Trägergas umfassen. Ein Durchströmen der Trennvorrichtung unter erhöhter Temperatur für dazu, dass Verunreinigungen, die in der Trennvorrichtung abgelagert sind, aus dieser gelöst werden und, ausgespült werden. Die Gasanalysevorrichtung kann hierzu mit einem Heizelement versehen sein, mit dem die Trennvorrichtung und/oder ihr Vorlauf vorgebbar beheizbar ist. Das Heizelement kann auch zur Durchführung des Messbetriebs der Gasanalysevorrichtung vorgesehen sein oder dezidiert für die selbsttätige Reinigung vorgesehen sein. Derartige Heizelemente sind typischerweise mit einer präzisen Temperaturregelung versehen, so dass eine vorteilhafte Reinigungstemperatur exakt vorgebbar ist. Ferner sind Gasanalysevorrichtungen üblicherweise mit einem hinreichend großen Vorrat an Trägergas verbunden. Die Verwendung separater Reinigungsgasgemische ist dadurch entbehrlich. Das Einleiten der selbsttätigen Reinigung erfordert keine zusätzlichen Eingriffe, beispielsweise durch einen Benutzer, und ist schnell durchführbar. Das Trägergas umfasst lediglich eine einzige Komponente, so dass auch bei erhöhten Temperaturen beim selbsttätigen Reinigen eine unerwünschte Elution der gelösten Komponenten aus der Trennvorrichtung ausschließbar sind. Ferner ist durch die selbsttätige Reinigung dazu geeignet, Fehler in der Gasanalysevorrichtung wie beispielsweis e ein Kleben einer Membran, vermieden werden. Ebenso ist durch die selbsttätige Reinigung vermeidbar, dass die Trennvorrichtung ihre maximale Betriebstemperatur überschreitet. Die selbsttätige Reinigung ist im beanspruchten Betriebsverfahren insgesamt mit erhöhter Wirksamkeit durchführbar.

Darüber hinaus kann das beanspruchte Betriebsverfahren einen fünften Schritt umfassen, in dem ein Auswertungsparameter des Detektors und/oder einer Auswertungseinheit und/oder ein Schaltparameter der Gasanalysevorrichtung angepasst wird. Das Anpassen erfolgt hierbei in Abhängigkeit von der im dritten Schritt ermittelten Differenz und/oder von dem im zweiten Schritt ermittelten Trennverhalten. Das Anpassen des Auswertungsparameters und/oder des Schaltparameters kann hierbei mittels einer vorgegebenen automatischen Prozedur, einem vorgegebenen Algorithmus und/oder einer Künstlichen Intelligenz erfolgen. Der fünfte Schritt kann unabhängig davon durchgeführt werden, ob ein bestimmungswidriger Betriebszustand vorliegt oder nicht. Beispielsweise ist im dritten Schritt ein sich verschlechternder Betriebszustand der Trennvorrichtung erfassbar, der keine Warnung oder eine selbsttätige Reinigung gebietet. In Reaktion hierauf ist durch Anpassen von zumindest einem Auswertungsparameter der Detektor in seinem Messverhalten anpassbar, so dass dessen Messgenauigkeit erhalten werden kann oder eine Einbuße an Messgenauigkeit gemindert werden kann. Alternativ oder ergänzend ist durch das Anpassen von zumindest einem Schaltparameter beispielsweise ein Schnittverhalten der Gasanalysevorrichtung anpassbar, durch das die Stoffprobe in der Gasanalysevorrichtung umgeleitet wird. Alternativ oder ergänzend ist eine Ventilbetätigung anpassbar. Auch dadurch ist die Messgenauigkeit der Gasanalysevorrichtung erhaltbar oder eine Einbuße an Messgenauigkeit verminderbar.

In einer weiteren Ausführungsform aus dem beanspruchten Betriebsverfahren kann der dritte Schritt mehrfach durchgeführt werden und so für die Differenz eine Mehrzahl an Werten ermittelt werden. Insbesondere kann der dritte Schritt während des Messbetriebs der Gasanalysevorrichtung betriebsbegleitend zyklisch mit einer festen oder veränderlichen Taktung durchgeführt werden. Das beanspruchte Betriebsverfahren kann weiter einen sechsten Schritt umfassen, in dem ein zeitlicher Gradient der im dritten Schritt ermittelten ersten Differenz ermittelt wird. Dies erfolgt beispielsweise basierend auf den Werten der ersten Differenz, die in mehreren Durchgängen des dritten Schritts ermittelt werden. Der so ermittelte zeitliche Gradient wird im sechsten Schritt mit einem Gradienten-Grenzwert verglichen. Es wird eine Zusatzwarnung ausgegeben, wenn der zeitliche Gradient den Gradienten-Grenzwert betragsmäßig übersteigt. Hierdurch ist beispielsweise eine übermäßig starke Degradation der Gasanalysevorrichtung, insbesondere der Trennvorrichtung, frühzeitig erkennbar. Die dem dritten Schritt zugrundeliegenden Größen sind mit einer hinreichend hohen Taktung erfassbar, so dass im dritten Schritt für die Differenz, also deren Werte, eine kohärente Zeitserie vorliegt. Hierdurch werden insgesamt die Möglichkeiten zur Erkennung eines bestimmungswidrigen Betriebszustands ausgeweitet. Beispielsweise ist eine Änderung einer Qualität des Trägergases erkennbar, wenn bei geringem Flaschendruck Verunreinigungen austreten oder eine verunreinigte Flasche mit Trägergas an die Gasanalysevorrichtung angeschlossen wird. Ebenso sind Undichtigkeiten an einem Flaschenanschluss an der Gasanalysevorrichtung erkennbar oder Undichtigkeiten infolge eines Defekts, beispielsweise eines Kapillarbruchs.

Ferner kann im beanspruchten Betriebsverfahren während der selbsttätigen Reinigung der Trennvorrichtung eine Testmessung durchgeführt werden. Die Testmessung kann mit einer Stoffprobe durchgeführt werden und kann die selbsttätige Reinigung unterbrechen oder begleitend zu einer Aufheizprozedur der Gasanalysevorrichtung ablaufen. Die Stoffprobe kann dabei als Referenzstoffprobe ausgebildet sein. Durch die Testmessung wird zumindest ein Trennleistungsparameter ermittelt. Anhand des Trennleistungsparameters wird ein Fortschritt der selbsttätigen Reinigung der Trennvorrichtung ermittelt. Dazu wird eine Differenz wie die Differenz gemäß dem dritten Schritt ermittelt und geprüft, ob diese innerhalb des zugehörigen Referenzwerts liegt, diesem also entspricht. Wenn die Differenz innerhalb des korrespondierenden Referenzwerts liegt, diesem also entspricht, wird die selbsttätige Reinigung beendet. Andernfalls wird die selbsttätige Reinigung wiederaufgenommen oder fortgesetzt. Die Testmessung kann nach einer festen oder variablen Zeitdauer durchgeführt werden. Die Zeitdauer kann durch einen Benutzer vorgegeben sein oder durch eine Künstliche Intelligenz. Die selbsttätige Reinigung ist so bedarfsgerecht anpassbar und die Verfügbarkeit der Gasanalysevorrichtung für den Messbetrieb wird erhöht. Alternativ erlaubt eine fest vorgegebene Zeitdauer der selbsttätigen Reinigung, beispielsweise ein festes Reinigungsprogramm, einen erhöhten Grad an Planbarkeit. Das feste Reinigungsprogramm ist dahingehend anpassbar, dass ein geforderter Qualitätsstandard beim Reinigen der Trennvorrichtung eingehalten wird. Hierdurch wird unter anderem ein Betrieb von Gasanalysevorrichtungen vereinfacht, die schwer zugänglich sind, beispielweise an entlegenen Orten installierte Gasanalysevorrichtungen. Ebenso wird ein Betrieb einer eignungsgeprüften Gasanalysevorrichtung vereinfacht, bei der manuelle Eingriffe in den Betrieb zu vermeiden sind.

Des Weiteren können im beanspruchten Betriebsverfahren die zumindest der zweite und dritte Schritt auch für einen zweiten Trennleistungsparameter durchgeführt werden. Detektoren sind dazu geeignet, eine Vielzahl an Messdaten über den Messbetrieb bereitzustellen und Steuereinheiten von Gasanalysevorrichtungen sind dazu, geeignet, entsprechend große Datenmengen ohne Weiteres zu verarbeiten. Insbesondere kann eine Echtzeitverarbeitung der Messdaten umgesetzt werden. Durch ein Erfassen und Auswerten des zweiten Trennleistungsparameters neben dem ersten Trennleistungsparameter ist ein bestimmungswidriger Betriebszustand noch schneller, zuverlässiger und genauer ermittelbar. Der zweite und dritte Schritt können analog auch für einen dritten, vierten, usw. Trennleistungsparameter durchgeführt werden. Das beanspruchte Betriebsverfahren ist folglich korrespondierend zur verfügbaren Rechenleistung skalierbar.

Die oben skizzierte Aufgabenstellung wird ebenso durch ein erfindungsgemäßes Computerprogrammprodukt gelöst. Das Computerprogrammprodukt ist dazu ausgebildet, Messsignale von einem Detektor, der zu einer Gasanalysevorrichtung gehört, zu empfangen und zu verarbeiten. Weiter ist das Computerprogrammprodukt dazu geeignet, einer Auswertungseinheit und/oder dem Detektor der Gasanalysevorrichtung zumindest einen Auswertungsparameter vorzugeben. Alternativ oder ergänzend ist das Computerprogrammprodukt dazu ausgebildet einen Schaltparameter der Gasanalysevorrichtung vorzugeben, durch den beispielsweise ein Ventil betätigbar ist. Weiter alternativ oder ergänzend ist das Computerprogrammprodukt dazu ausgebildet, ein Steuersignal an eine Trägergaszufuhr und/oder an ein Heizelement der Gasanalysevorrichtung auszugeben. Ebenso kann das Computerprogrammprodukt dazu ausgebildet sei, einen optimierten Geräteparametersatz zu empfangen und basierend hierauf die selbsttätige Reinigung der Trennvorrichtung der Gasanalysevorrichtung durchführen zu lassen. Erfindungsgemäß ist das Computerprogrammprodukt dazu ausgebildet, zumindest eines der oben beschriebenen Betriebsverfahren umzusetzen. Das Computerprogrammprodukt kann dazu vollständig als Software ausgebildet sein oder festverdrahtet sein, also beispielsweise als Integrierte Schaltung, Chip oder FPGA ausgebildet sein. Ferner kann das Computerprogrammprodukt monolithisch ausgebildet sein, also auf einer einzigen Hardwareplattform ausführbar sein. Alternativ kann das Computerprogrammprodukt modular ausgebildet sein und eine Mehrzahl an Teilprogrammen umfassen, die auf unterschiedlichen Hardwareplattformen ausgeführt werden und die über mindestens eine kommunikative Datenverbindung zusammenwirken. Ein modular ausgebildetes Computerprogrammprodukt kann beispielsweise auf einer Computer-Cloud ausführbar sein.

Ebenso wird die eingangs beschriebene Aufgabe durch eine erfindungsgemäße Steuereinheit für eine Gasanalysevorrichtung gelöst, die mit zumindest einem Detektor der Gasanalysevorrichtung mittelbar oder unmittelbar koppelbar ist. Bei einer mittelbaren Kopplung mit dem Detektor ist die Steuereinheit unter Zwischenschaltung einer weiteren Steuer- Auswertungs- oder Überwachungseinheit mit dem Detektor verbunden. Die Steuereinheit ist dazu ausgebildet, zumindest eines der oben skizzierten Betriebsverfahren auf der Gasanalysevorrichtung umzusetzen und ist dazu mit einem Computerprogrammprodukt nach einer der oben dargelegten Ausführungsformen ausgestattet. Die Steuereinheit kann zumindest funktional die Auswertungseinheit der Gasanalysevorrichtung umfassen. Ferner kann die Steuereinheit dazu ausgebildet sein, mittelbar oder unmittelbar, ein Steuersignal an eine Trägergaszufuhr und/oder ein Heizelement der Gasanalysevorrichtung auszugeben, einen Auswertungsparameter der Auswertungseinheit und/oder des Detektors vorzugeben, und/oder einen Schaltparameter der Gasanalysevorrichtung vorzugeben. Die beanspruchte Steuereinheit kann folglich eine Steuereinheit sein, mit der die Gasanalysevorrichtung auch ohne Implementierung des zugrundeliegenden Betriebsverfahrens gesteuert wird, oder als Zusatzgerät, das mit der Gasanalysevorrichtung koppelbar ist. Eine als Zusatzgerät ausgebildete Steuereinheit erlaubt es, in einfacher Weise das zugrundeliegende Betriebsverfahren auf einer bestehenden Gasanalysevorrichtung zu implementieren.

Ferner wird die oben dargestellte Aufgabe durch eine erfindungsgemäße Gasanalysevorrichtung gelöst. Die Gasanalysevorrichtung ist zu einem Ermitteln einer Zusammensetzung einer Stoffprobe ausgebildet und umfasst eine Trennvorrichtung und einen Detektor. Erfindungsgemäß ist die Gasanalysevorrichtung dazu ausgebildet, zumindest eine Ausführungsform des oben dargelegten Betriebsverfahrens umzusetzen. Dazu kann die Gasanalysevorrichtung mit einer Steuereinheit nach einer der oben skizzierten Ausführungsformen ausgestattet sein. Die Gasanalysevorrichtung kann insgesamt als Gaschromatograph ausgebildet sein, der eine Probenaufbereitungsvorrichtung und einen Shelter umfassen kann.

Die zugrunde liegende Aufgabenstellung wird gleichermaßen durch ein erfindungsgemäßes Simulationsprogrammprodukt gelöst. Das Simulationsprogrammprodukt dient zu einem Simulieren eines Betriebsverhaltens einer Gasanalysevorrichtung, die eine Trennvorrichtung umfasst. Das Simulationsverfahren umfasst einen ersten Schritt, in dem ein Datensatz bereitgestellt wird, durch den zumindest ein Abschnitt der Gasanalysevorrichtung, insbesondere der Trennvorrichtung, abgebildet ist. Die über den Datensatz abgebildeten Komponenten der Gasanalysevorrichtung bzw. die Gasanalysevorrichtung selbst stellen somit virtuelle Repräsentanzen dar. Mittels des Datensatzes ist eine Funktionsweise der Trennvorrichtung zumindest teilweise nachstellbar. Der Datensatz kann beispielsweise eine Aufbaubeschreibung der Trennvorrichtung umfassen und/oder ein Rechenmodell der Trennvorrichtung. Weiter umfasst das Simulationsverfahren einen zweiten Schritt, in dem ein Betriebsparameter vorgegeben wird, durch den dazu zu simulierende Betriebsverhalten definiert ist. Das zu simulierende Betriebsverhalten kann beispielsweise ein Trennverhalten der Trennvorrichtung umfassen, der in Form ihrer entsprechenden virtuellen Repräsentanz, eine Stoffprobe zugeführt wird. Das zu simulierende Trennverhalten tritt hierbei im Zuge eines Betriebs der Trennvorrichtung in einer Gasanalysevorrichtung auf. Ebenso kann das zu simulierende Betriebsverhalten eine selbsttätige Reinigung der Trennvorrichtung umfassen. Zu den Betriebsparametern kann beispielsweise eine Dosierung der Stoffprobe, eine Angabe über ihre Zusammensetzung, ihre Temperatur, ihr Druck, ihre Strömungsgeschwindigkeit, ihre Viskosität, ein chemisches Reaktionsverhalten einer Komponente der Stoffprobe mit einer benetzten Oberfläche in der Trennvorrichtung, und/oder ein Auswertungsparameter eines Detektors sein. Der Betriebsparameter kann beispielsweise durch einen Benutzer und/oder eine Künstliche Intelligenz vorgegeben sein. Insbesondere kann der zumindest eine Betriebsparameter durch eine Messung an einer realen Komponente erfasst werden und damit deren virtuelle Repräsentanz im Simulationsverfahren eingestellt werden.

Darüber hinaus gehört ein dritter Schritt zum erfindungsgemäßen Simulationsverfahren, in dem ein Simulationsprogrammprodukt ausgeführt wird. Das Simulationsprogrammprodukt ist dazu ausgebildet, anhand des im ersten Schritt vorgegeben Datensatzes und des im zweiten Schritt vorgegebenen zumindest einen Betriebsparameters einen ersten Trennleistungsparameter der Trennvorrichtung, also ihrer virtuellen Repräsentanz, zu ermitteln. Ferner umfasst das Simulationsverfahren einen vierten Schritt, in dem der im dritten Schritt ermittelte erste Trennleistungsparameter an einen Benutzer und/oder eine Datenschnittstelle ausgegeben wird. Über die Datenschnittstelle ist der erste Trennleistungsparameter beispielsweise an andere simulationsgerichtete Computerprogramme übertragbar.

Erfindungsgemäß ist die Gasanalysevorrichtung, zu der die Trennvorrichtung gehört, gemäß einer der oben skizzierten Ausführungsformen ausgebildet. Der Erfindung liegt unter anderem die Erkenntnis zugrunde, dass ein physikalisch-chemisches Verhalten, das bei einer Verunreinigung oder einer Reinigung einer benetzten Oberfläche in einer Trennvorrichtung auftritt, mit verhältnismäßig geringem Aufwand präzise simulierbar ist. Insbesondere ein Reinigungsverhalten, bei dem Verunreinigungen mit erhöhter Temperatur und/oder erhöhtem Druck zersetzt und ausgespült werden, ist mit erhöhter Präzision einfach nachstellbar. Bei Verwendung eines inerten Trägergases für eine solche selbsttätige Reinigung ist eine aufwendige Simulation von chemischen Umsetzungen der Verunreinigungen entbehrlich. Mittels des erfindungsgemäßen Simulationsprogrammprodukts ist eine Dauer und Parametrierung einer selbsttätigen Reinigung gemäß dem vierten Schritt des beanspruchten Betriebsverfahrens schnell und exakt vorhersagbar. Dementsprechend ist eine solche selbsttätige Reinigung durch ihre verbesserte Vorhersagbarkeit in einfacher Weise in einen laufenden Messbetrieb der Gasanalysevorrichtung einplanbar. Weiter ist das Simulationsverfahren dazu geeignet, basierend auf einer Künstlichen Intelligenz, Parameter für die selbsttätige Reinigung zu optimieren. Die Optimierung kann beispielsweise in einer reduzierten Dauer der selbsttätigen Reinigung bestehen. Die Wirtschaftlichkeit eines Produktionsprozesses, der durch eine entsprechende Gasanalysevorrichtung überwacht wird, ist somit steigerbar.

Ferner wird die eingangs beschriebene Aufgabenstellung durch ein erfindungsgemäßes Simulationsprogrammprodukt gelöst. Das Simulationsprogrammprodukt ist zu einem Simulieren eines Betriebsverhaltens einer Gasanalysevorrichtung, insbesondere einer Trennvorrichtung der Gasanalysevorrichtung, ausgebildet. Erfindungsgemäß ist das Simulationsprogrammprodukt dazu eingerichtet, ein Simulationsverfahren gemäß einer der oben beschriebenen Ausführungsformen durchzuführen. Das Simulationsprogramprodukt kann als Digitaler Zwilling der Gasanalysevorrichtung ausgebildet sein, insbesondere als Digitaler Zwilling im Sinne der Patentanmeldung US 2017/0286572 A1. Der Offenbarungsgehalt von US 2017/0286572 A1 wird durch Verweisung in die vorliegende Anmeldung miteinbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Aufbau einer ersten Ausführungsform der beanspruchten Gasanalysevorrichtung in einem ersten Stadium einer Ausführungsform des beanspruchten Betriebsverfahrens;
- FIG 2: einen schematischen Ablauf eines zweiten Stadiums der Ausführungsform des beanspruchten Betriebsverfahrens;
- FIG 3: einen schematischen Ablauf eines dritten Stadiums der Ausführungsform des beanspruchten Betriebsverfahrens;
- FIG 4: einen schematischen Ablauf einer Ausführungsform des beanspruchten Simulationsverfahrens.

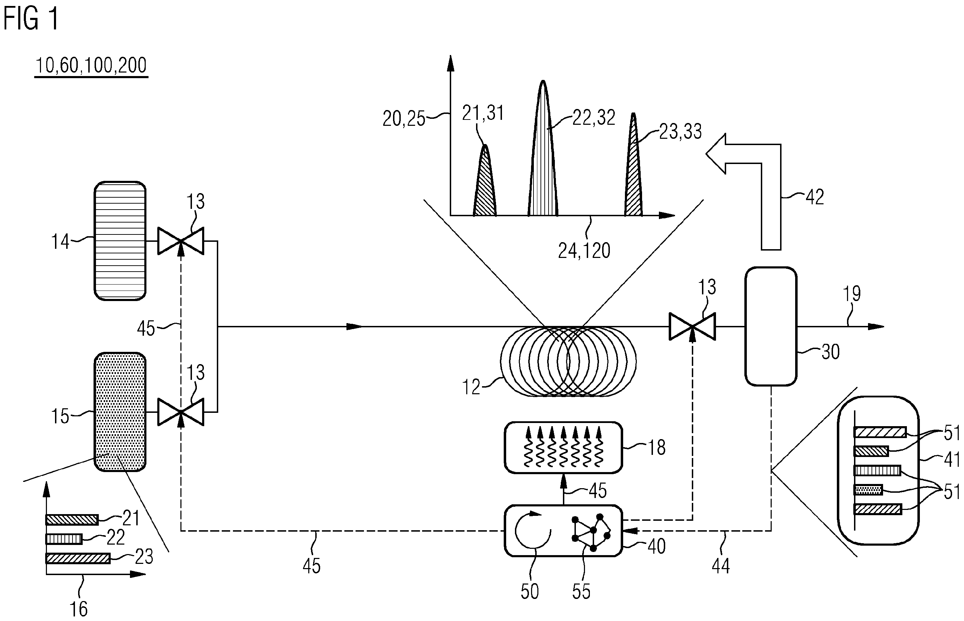

In FIG 1 ist schematisch ein Aufbau einer Ausführungsform einer beanspruchten Gasanalysevorrichtung 10 gezeigt, auf der eine Ausführungsform eines beanspruchten Betriebsverfahrens 100 ausgeführt wird. Das Betriebsverfahren 100 befindet sich dabei in einem ersten Stadium. Die Gasanalysevorrichtung 10 weist eine Trennvorrichtung 12 auf, die als Trennsäule ausgebildet ist, durch die eine Stoffprobe 15 in ihre Komponenten 21, 22, 23 trennbar ist. Der Trennvorrichtung 12 ist eine Trägergas 14 und/oder die Stoffprobe 15 vorgebbar zuführbar. Zu einer Dosierung des Trägergases 14 und/oder der Stoffprobe 15 ist die Gasanalysevorrichtung 10 mit entsprechenden Ventilen 13 ausgestattet. Die Gasanalysevorrichtung 10 ist dazu ausgebildet, eine Zusammensetzung 16 der Stoffprobe 15 zu ermitteln und verfügt hierzu über einen Detektor 30, der pneumatisch mit der Trennvorrichtung 12 verbunden ist. Weiter verfügt die Gasanalysevorrichtung 10 über ein Heizelement 18, durch die eine vorgebbare Temperatur in der Trennvorrichtung 12 einstellbar ist. Eine Zufuhr der Stoffprobe 15 und/oder des Trägergases 14 an den Detektor 30 ist über ein zwischengeschaltetes Ventil 13 vorgebbar dosierbar. Der Detektor 30 ist dazu ausgebildet, die für in ihre Komponenten 21, 22, 23 aufgetrennte Stoffprobe 15 ein Chromatogramm 20 zu ermitteln. Das Ermitteln des Chromatogramms 20 erfolgt in Abhängigkeit von einem Geräteparametersatz 41, der eine Mehrzahl an Auswertungsparametern 51 umfasst. Das durch den Detektor 30 erzeugte Chromatogramm 20 umfasst eine Zeitachse 24 und eine Intensitätsachse 25. Durch das wirksame Trennverhalten der Trennvorrichtung 12 liegt im Chromatogramm 20 für eine erste Komponente 21 der Stoffprobe 15 ein erste Detektorantwort 31 vor, für eine zweite Komponente 22 eine zweite Detektorantwort 32 und für die dritte Komponente 23 eine dritte Detektorantwort 33. Die erste, zweite und dritte Detektorantwort 31, 32, 33 sind in einem bestimmungsgemäßen Betriebszustand, wie in FIG 1 gezeigt, im Wesentlichen überlappungsfrei und dadurch separat auswertbar. Das Chromatogramm 20 ist im Zuge des Messbetriebs der Gasanalysevorrichtung 10 durch eine Auswertung 42 mit dem Detektor 30 bereitstellbar. Weiter ist der Detektor 30 dazu ausgebildet, eine ausgewertete Dosis der Stoffprobe 15 und/oder das Trägergas 14 über einen Auslass 19 abzuführen.

Die Gasanalysevorrichtung 10 ist mit einer Steuereinheit 40 ausgestattet, die dazu ausgebildet ist, über kommunikative Datenverbindungen 44 den Geräteparametersatz 41 an den Detektor 30 auszugeben. Ebenso ist die Steuereinheit 40 dazu ausgebildet, Steuersignale 45 an die Ventile 13 und das Heizelement 18 auszugeben und diese so zu betätigen. Auf der Steuereinheit 40 ist ein Computerprogrammprodukt 50 ausführbar gespeichert, durch das der Geräteparametersatz 41 und die Steuersignale 45 ermittelbar sind. Das Computerprogrammprodukt 50 umfasst eine Künstliche Intelligenz 55, die als Machine-Learning-Algorithmus ausgebildet ist. Ferner ist eine virtuelle Repräsentanz der Gasanalysevorrichtung 10 in einem nicht näher gezeigten Simulationsprogrammprodukt 60 gespeichert, mit der das Betriebsverhalten der Gasanalysevorrichtung 10 nachstellbar ist. Das Simulationsprogrammprodukt 60 ist hierbei als Digitaler Zwilling der Gasanalysevorrichtung 10 ausgebildet und dazu geeignet, ein nicht näher abgebildetes Simulationsverfahren 200 umzusetzen.

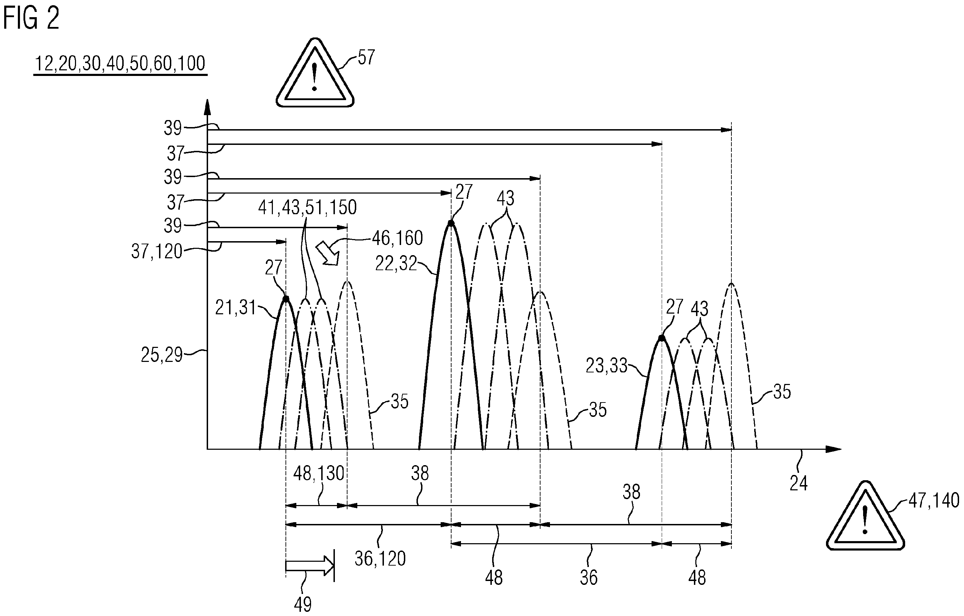

Das in FIG 1 gezeigte Stadium des Betriebsverfahrens 100 geht davon aus, dass die Gasanalysevorrichtung 10, wie in FIG 1 gezeigt, in einem funktionstüchtigen Betriebszustand bereitgestellt ist. Ebenso geht das in FIG 1 dargestellt Stadium des Betriebsverfahrens 100 davon aus, dass ein erster Schritt 110 durchgeführt ist, in dem auf der Gasanalysevorrichtung 10 ein Messbetrieb durchgeführt wird, also die Zusammensetzung 16 der Stoffprobe 15 ermittelt wird. Weiter gehört zum Stadium gemäß FIG 1, dass ein zweiter Schritt 120 durchgeführt wird, in dem das Trennverhalten der Trennvorrichtung 12 durchgeführt wird. Dabei wird zumindest ein nicht näher gezeigter erster Trennleistungsparameter für zumindest die erste Komponente 21 der Stoffprobe 15 ermittelt wird. Einzelne Aspekte des zweiten Schritts 120 werden detaillierter in FIG 2 gezeigt.

Ein zweites Stadium des beanspruchten Betriebsverfahrens 100 ist in FIG 2 dargestellt, wobei das zweite Stadium auf das in FIG 1 gezeigte erste Stadium folgt. Im Einzelnen zeigt FIG 2 in einem Diagramm nach Art eines Chromatogramms 20, das zweite Stadium. Das Chromatogramm 20 weist eine horizontale Zeitachse 24 auf und eine vertikale Intensitätsachse 25, so dass ein Verhalten des Detektors 30 gezeigt ist. Die vertikale Achse stellt ebenso einen Bezugszeitpunkt 29 dar. Im zweiten Schritt 120 wird eine Retentionszeit 37 der ersten Detektorantwort 31 für die erste Komponente 21 der Stoffprobe 15 ermittelt. Die Retentionszeit 37 stellt hierbei im Wesentlichen eine Zeitdauer ab dem Bezugszeitpunkt 29 bis zum Auftreten eines Peaks 27, also eines Maximalwerts, der ersten Detektorantwort 31 dar. Die erste Retentionszeit 39 stellt somit den ersten Trennleistungsparameter dar, der im zweiten Schritt 120 ermittelt wird. Die Retentionszeit 37 der ersten Komponente 21 wird mit einem zugehörigen Referenz-Retentionszeit 39 verglichen, der einer Retentionszeit für die erste Komponente 21 in einem bestimmungsgemäßen Betriebszustand der Trennvorrichtung 12 entspricht. Die Referenz-Retentionszeit 39 für die erste Komponente 21 stellt folglich einen ersten Referenzwert im Sinne des zweiten Schritts 120 dar. Korrespondierend zur ersten Referenz-Retentionszeit 39 liegt auch eine Referenz-Detektorantwort 35 für die erste Komponente 21 vor. Analog wird im zweiten Schritt 120 auch eine Retentionszeit 37 für die zweite Komponente 22 und die dritte Komponente 23 ermittelt. Diese werden ebenso mit einer korrespondierenden Referenz-Retentionszeit 39 verglichen. Für die zweite und dritte Komponente 22, 23 der Stoffprobe 15 liegen analog ebenso Referenz-Detektorantworten 35 vor. Bei der zweiten und dritten Komponente 22, 23 liegt analog zur ersten Komponente 21 ebenso gegenüber einem Referenzzustand, der durch Referenz-Detektorantworten 35 beschrieben ist, eine Änderung im Retentionsverhalten vor.

Die Retentionszeit 37 der ersten Komponente 21 weicht von der Referenz-Retentionszeit 39 ab. In einem dritten Schritt 130 des Betriebsverfahrens 100 wird aus diesen eine Differenz 48 ermittelt und mit einem einstellbaren Schwellenwert 49 verglichen. Der Schwellenwert 49 ist beispielsweise durch einen Benutzer oder durch die Künstliche Intelligenz 55 des Computerprogrammprodukts 50 vorgegeben sein, mit dem das Betriebsverfahren 100 durchgeführt wird. Wenn die ermittelte Differenz 48, wie in FIG 1 gezeigt, den zugehörigen Schwellenwert 49 betragsmäßig übersteigt, wird ein bestimmungswidriger Betriebszustand der Trennvorrichtung 10 erkannt. Wenn der bestimmungswidrige Betriebszustand erkannt ist, wird in einem vierten Schritt 140 eine Warnung 47 an einen Benutzer und/ oder eine Datenschnittstelle ausgegeben. Der dritte Schritt 130 kann korrespondierend auch anhand der zweiten oder dritten Detektorantwort 32, 33, also der zweiten bzw. Komponente 22, 23 und ihren Retentionszeiten 37 und Referenz-Retentionszeiten 39 durchgeführt werden. Ebenso kann der dritte Schritt 130 basierend auf einer Kombination der ersten, zweite und/ oder dritten Detektorantwort 31, 32, 33 durchgeführt werden.

Ergänzend wird ein fünfter Schritt 150 des Betriebsverfahrens 100 durchgeführt, in dem historische Detektorantworten 43 zur ersten Komponente 21 der Stoffprobe 15 ausgewertet werden und mit der im zweiten Schritt 120 erfassten zugehörigen ersten Detektorantwort 31 und/oder der entsprechenden Referenz-Detektorantwort 35 verglichen. Durch eine entsprechende Auswertung wird im fünften Schritt 150 erkannt, dass eine Anpassung von zumindest einem Auswertungsparameter 51 des Geräteparametersatzes 41 geboten ist. Es wird ein geänderter Geräteparametersatz 41 ermittelt und im fünften Schritt 150 an den Detektor 30 ausgegeben. Dadurch wird der Betrieb des Detektors 30 modifiziert fortgesetzt. Der fünfte Schritt 150 kann auch korrespondierend basierend auf der zweiten Detektorantwort 32, der dritten Detektorantwort 33, oder einer Kombination aus mehreren der Detektorantworten 31, 32, 33 durchgeführt werden.

Zusätzlich wird im beanspruchten Betriebsverfahren 100 ein sechster Schritt 160 durchgeführt, in dem die historischen Detektorantworten 43 mit der ersten Detektorantwort 31 aus dem zweiten Schritt 120 und/oder der entsprechenden Referenz-Detektorantwort 35 verglichen. Im sechsten Schritt 160 wird ein zeitlicher Gradient 46 zumindest der Differenz 48 zwischen der Referenz-Retentionszeit 39 und der Retentionszeit 37 ermittelt. Wenn der zeitliche Gradient 46 betragsmäßig einen Gradienten-Grenzwert übersteigt, wird eine übermäßig schnelle Verschlechterung des Betriebszustands der Trennvorrichtung 12 erkannt. In diesem Fall wird im sechsten Schritt 160 eine Zusatzwarnung 57 an den Benutzer und/oder die Datenschnittstelle ausgegeben. Der sechste Schritt 160 kann auch korrespondierend basierend auf der zweiten Detektorantwort 32, der dritten Detektorantwort 33, oder einer Kombination aus mehreren der Detektorantworten 31, 32, 33 durchgeführt werden.

Alternativ oder ergänzend wird im zweiten Schritt 120 als Trennungsleistungsparameter eine Trenndistanz 36 zwischen einem Peak 27 der ersten Komponente 21 und der zweiten Komponente 22 der Stoffprobe 15 erfasst. Im dritten Schritt 130 wird die Differenz 48 zwischen der Trenndistanz 36 mit der zugehörigen Referenz-Trenndistanz 38 zwischen der ersten und zweiten Komponente 21, 22 ermittelt. Die Trenndistanz 36 bezieht sich hierbei auf den zeitlichen Abstand, also den Abstand entlang der Zeitachse 24 des Chromatogramms 20 zwischen den Peaks 27 der ersten und zweiten Detektorantwort 31, 32. Die Lage des Peaks 27 der zweiten Detektorantwort 32 ist gegenüber der zugehörigen Referenz-Detektorantwort 35 für die zweite Komponente 22 versetzt. Im Hinblick auf die zweite Komponente 22 liegt in der Trennvorrichtung 12 damit gemäß FIG 2 auch eine Beeinträchtigung des Betriebszustands vor. Das Erfassen der Trenndistanz 36 zwischen der ersten und zweiten Komponente 21, 22 ist auch ohne eine exakte Kenntnis des Bezugszeitpunkts 29 durchführbar. Die Trenndistanz 36 zwischen der ersten und zweiten Komponente 21, 22 und die Retentionszeit 37 der ersten Komponente 21 sind damit Trennleistungsparameter, die komplementär zueinander einsetzbar sind. Insbesondere sind die Trennleistungsparameter gegenseitig plausibilisierbar. Dadurch ist das beanspruchte Betriebsverfahren 100 robust durchführbar. Die Auswertung der Trenndistanz 36 zwischen der ersten und zweiten Komponente 21, 22 ist zum Plausibilisieren der Auswertung der Retentionszeit 37 der ersten Komponente 21 einsetzbar und umgekehrt. Dadurch werden irrtümliche Warnungen vor vermeintlichen bestimmungswidrigen Betriebszuständen minimiert oder vermieden.

Weiter wird im Betriebsverfahren 100 eine Retentionszeit 37 für eine dritte Komponente 23 der Stoffprobe 15 erfasst. Gemäß FIG 2 weicht die Lage des Peaks 27 einer dritten Detektorantwort 33, die zur dritten Komponente 23 gehört, von einer bestimmungsgemäßen Lage ab, also einer zugehörigen Referenz-Retentionszeit 39. Analog zur ersten und zweiten Komponente 21, 22 sind der zweite, dritte, vierte, fünfte und sechste Schritt 120, 130, 140, 150, 160 auch analog für die dritte Komponente 23 bzw. eine Kombination der dritten Komponente 23 mit der ersten und/oder zweiten Komponente 21, 22 durchführbar. Je komplexer die Stoffprobe 15 ist, also je mehr Komponenten 21, 22, 23 sie umfasst, umso genauer sind erkannte bestimmungswidrige Betriebszustände der zugrunde liegenden Gasanalysevorrichtung 10 plausibilisierbar. Folglich steigt die Aussagekraft des beanspruchten Betriebsverfahrens 100 mit der Komplexität der Stoffprobe 15.

Das Betriebsverfahren 100 wird unter Einsatz eines entsprechend ausgebildeten Computerprogrammprodukts 50 durchgeführt, das auf der Steuereinheit 40 der Gasanalysevorrichtung 10 ausführbar gespeichert ist. Ferner wird das Betriebsverhalten der Gasanalysevorrichtung 10, auf der das Betriebsverfahren 100 durchgeführt wird, durch ein Simulationsprogrammprodukt 60 nachgestellt, das als Digitaler Zwilling zumindest der Trennvorrichtung 12der Gasanalysevorrichtung 10 ausgebildet ist. Insbesondere ist das Simulationsprogrammprodukt 60 dazu ausgebildet, ein Simulationsverfahren 200 durchzuführen, mit dem das Betriebsverhalten der Gasanalysevorrichtung 10 nachgestellt wird.

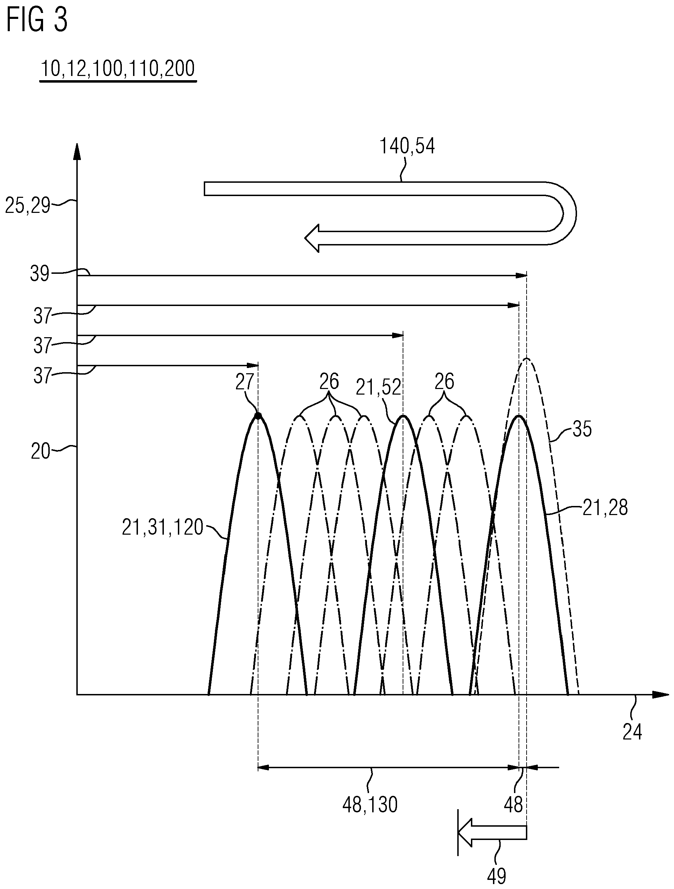

Ein drittes Stadium des beanspruchten Betriebsverfahrens 100 ist in FIG 3 dargestellt. Das dritte Stadium nach FIG 3 kann jederzeit während des in FIG 2 gezeigten zweiten Stadiums einsetzen. Das dritte Stadium nach FIG 3 geht davon aus, dass die Gasanalysevorrichtung 10 funktionstüchtig bereitgestellt ist und auf dieser ein Messbetrieb abläuft, wie beispielsweise in FIG 1 gezeigt. Insgesamt ist der erste Schritt 110 des Betriebsverfahrens 100 erfolgreich abgeschlossen. Im Einzelnen zeigt FIG 3 ein Chromatogramm 20, das eine horizontale Zeitachse 24 und eine vertikale Intensitätsachse 25 umfasst. Die vertikale Intensitätsachse 25 stellt ebenso einen Bezugszeitpunkt 29 dar, durch den die zugehörigen Schritte definiert sind.

In einem zweiten Schritt 120 des Betriebsverfahrens 100 wird für den ersten Stoff 21 eine erste Detektorantwort 31 erfasst. Die Lage des Peaks 27 der ersten Detektorantwort 31 entspricht einer Retentionszeit 37, die als Trennleistungsparameter im zweiten Schritt 120 erfasst wird. Durch Vergleichen mit der zugehörigen Referenz-Retentionszeit 39 wird zwischen der Referenz-Retentionszeit 39 und der erfassten Retentionszeit 37 die Differenz 48 ermittelt. Die Differenz 48 wird mit einem zugehörigen vorgebbaren Schwellenwert 49 verglichen, den ermittelte Differenz 48 übersteigt. Dies erfolgt im dritten Schritt 130. Anhand der ermittelten Differenz 48 im Falle der in FIG 3 links gezeigten Detektorantwort 31 wird ein bestimmungswidriger Betriebszustand erkannt. Im vierten Schritt 140 wird eine selbsttätige Reinigung der Trennvorrichtung 12 der Gasanalysevorrichtung 10 eingeleitet.

Durch die selbsttätige Reinigung wird eine Verunreinigung der Trennvorrichtung 12 verringert. Der Fortschritt der selbsttätigen Reinigung ist in FIG 3 durch virtuelle Detektorantworten 26 für die erste Komponente 21 dargestellt. Die selbsttätige Reinigung wird unterbrochen und eine Testmessung 52 für die erste Komponente 21 durchgeführt. Hierzu wird eine Stoffprobe 15 mit der ersten Komponente 21 in die Trennvorrichtung 12 eingeleitet und die zugehörige Retentionszeit 37 ermittelt. Die bei der Testmessung 52 ermittelte Retentionszeit 37 der ersten Komponente 21 wird mit der Referenz-Retentionszeit 39 verglichen und so ermittelt, ob die selbsttätige Reinigung bereits hinreichend wirksam ist. Im Fall der Testmessung 52 nach FIG 3 ist eine Weiterführung der selbsttätigen Reinigung geboten. Der vierte Schritt 140 wird folglich zur Durchführung der selbsttätigen Reinigung zurückgeführt. Die selbsttätige Reinigung wird durchgeführt, bis die Differenz 48 zwischen der Retentionszeit 37 für die erste Komponente 21 und der Referenz-Retentionszeit 39 den einstellbaren Schwellenwert 49 betragsmäßig unterschreitet. In diesem Fall erfolgt eine Wiederaufnahme 28 des Messbetriebs. Das Zusammenwirken von zumindest einer Testmessung 52 und der selbsttätigen Reinigung stellt eine Prüfschleife 54 dar, durch die die selbsttätige Reinigung regelbar ist. Die Prüfschleife 54 kann zeit- oder ereignisgesteuert ausgebildet sein. Die Dauer der selbsttätigen Reinigung der Trennvorrichtung 12 ist somit bedarfsgerecht anpassbar. Insbesondere wird ein unproduktives Weiterlaufen der selbsttätigen Reinigung in einem bestimmungsgemäßen Betriebszustand minimiert. Hierdurch wird insgesamt die Wirtschaftlichkeit des Betriebs der zugrunde liegenden Gasanalysevorrichtung 10 weiter gesteigert. Das in FIG 3 gezeigte Betriebsverhalten ist durch ein Simulationsverfahren 200 nachstellbar, das mittels eines Simulationsprogrammprodukts 60 durchführbar ist. Das Simulationsprogrammprodukt 60 ist hierbei als Digitaler Zwilling zumindest der Trennvorrichtung 12 ausgebildet.

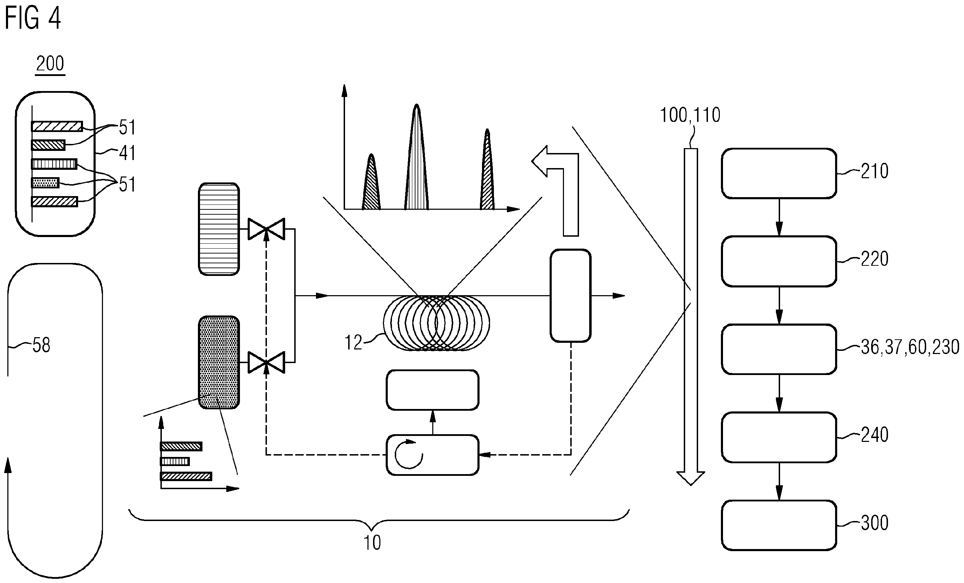

Ein Ablauf einer Ausführungsform des beanspruchten Simulationsverfahrens 200 ist in FIG 4 schematisch abgebildet. Das Simulationsverfahren 200 ist dazu ausgebildet, ein Betriebsverhalten zumindest einer Trennvorrichtung 12 einer Gasanalysevorrichtung 10 nachzustellen, auf dem beispielsweise ein Betriebsverfahren 100 durchgeführt wird. Das Betriebsverfahren 100 läuft parallel zum Simulationsverfahren 200 ab und wird durch das Simulationsverfahren 200 überwacht. Zum nachgestellten Betriebsverhalten gehört ein erster Schritt 110 des Betriebsverfahrens 100, in dem ein Messbetrieb mit der Gasanalysevorrichtung 10 bzw. ihrer virtuellen Repräsentanz erfolgt. In einem ersten Schritt 210 des Simulationsverfahrens 200 wird ein Datensatz bereitgestellt, durch den zumindest ein Abschnitt der Trennvorrichtung 12 abgebildet ist. Durch den Datensatz wird eine Funktionsweise der Trennvorrichtung 12 zumindest teilweise nachgestellt. Weiter umfasst das Simulationsverfahren 200 einen zweiten Schritt 220, in dem zumindest ein Betriebsparameter vorgegeben wird. Durch den Betriebsparameter ist der im ersten Schritt 110 des Betriebsverfahrens 100 durchgeführte Messbetrieb näher charakterisiert. Des Weiteren gehört ein dritter Schritt 230 zum beanspruchten Simulationsverfahren 200, in dem ein Simulationsprogrammprodukt 60 ausgeführt wird. Das Simulationsprogrammprodukt 60 ist als Digitaler Zwilling der Gasanalysevorrichtung 10 ausgebildet und dazu eingerichtet, aus dem Datensatz zumindest der Trennvorrichtung und dem zumindest einen Betriebsparameter einen Trennleistungsparameter zu ermitteln. Der Trennleistungsparameter kann hierbei beispielsweise eine Retentionszeit 37 und/oder ein Trenndistanz 36 sein, wie in FIG 2 exemplarisch gezeigt. Darüber hinaus umfasst das Simulationsverfahren 200 einen vierten Schritt 240, in dem der ermittelte Trennleistungsparameter an einen Benutzer und/oder eine Datenschnittstelle ausgegeben werden. Ferner wird das Verfahren 100 in einer Schleife 58 wiederholt durchgeführt und der Geräteparametersatz 41 mit einer Mehrzahl an Auswertungsparametern 51 optimiert. Dies erfolgt solange der zweite bis vierte Schritt 120, 140 ablaufen. Mit Ende des ablaufenden Betriebsverfahrens 100 wird auch das Simulationsverfahren 200 beendet. Das Simulationsverfahren 200 erreicht damit einen Endzustand 300.

## Patentansprüche

1. Betriebsverfahren (100) für eine Gasanalysevorrichtung (10), die eine Trennvorrichtung (12) zum Trennen einer zugeführten Stoffprobe (15) aufweist, umfassend die Schritte:
a) Bereitstellen der Gasanalysevorrichtung (10), auf der ein Messbetrieb abläuft;
b) Erfassen eines Trennverhaltens der Trennvorrichtung (12) und Erfassen zumindest eines ersten Trennleistungsparameters (36, 37) für zumindest eine erste Komponente (21) der Stoffprobe (15);
c) Erkennen eines bestimmungswidrigen Betriebszustands der Trennvorrichtung (12), wenn eine Differenz (48) dem ersten Trennleistungsparameter (36, 37) und dem ersten Referenzwert (38, 39) einen einstellbaren ersten Schwellenwert (49) betragsmäßig übersteigt oder unterschreitet;
d) Einleiten einer selbsttätigen Reinigung der Trennvorrichtung (12) und/oder Ausgeben einer Warnung (47), wenn im Schritt c) ein bestimmungswidriger Betriebszustand erkannt wird.

2. Betriebsverfahren (100) nach Anspruch 1, **dadurch gekennzeichnet, dass** der erste Trennleistungsparameter (36, 37) eine erste Retentionszeit (37) der ersten Komponente (21) ist.

3. Betriebsverfahren (100) nach Anspruch 1 oder 2, **dadurch gekennzeichnet, dass** der erste Trennleistungsparameter (36, 37) eine Trenndistanz (36) zwischen der ersten und einer zweiten Komponente (21, 22) der Stoffprobe (15) ist.

4. Betriebsverfahren (100) nach einem der Ansprüche 1 bis 3, **dadurch gekennzeichnet, dass** der erste Trennleistungsparameter (36, 37) eine erste Peak-Breite für die erste Komponente (21) ist.

5. Betriebsverfahren (100) nach einem der Ansprüche 1 bis 4, **dadurch gekennzeichnet, dass** die selbsttätige Reinigung ein Ausheizen und/oder ein Spülen der Trennvorrichtung (12) mit einem Trägergas (14) umfasst.

6. Betriebsverfahren (100) nach einem der Ansprüche 1 bis 5, **dadurch gekennzeichnet, dass** das Betriebsverfahren (100) weiter den Schritt umfasst:
e) Anpassen eines Auswertungsparameters (51) eines Detektors (30) und/oder einer Auswertungseinheit (40) der Gasanalysevorrichtung (10) und/oder eines Schaltparameters (45) einer der Gasanalysevorrichtung () in Abhängigkeit von der in Schritt c) ermittelten Differenz und/oder dem in Schritt b) ermittelten Trennverhalten.

7. Betriebsverfahren (100) nach einem der Ansprüche 1 bis 6, **dadurch gekennzeichnet, dass** zumindest der Schritt c) mehrfach durchgeführt wird und das Betriebsverfahren (100) weiter den Schritt umfasst:
f) Ermitteln eines zeitlichen Gradienten () der im Schritt c) ermittelten Differenz (48) und Ausgeben einer Zusatzwarnung (49), wenn der zeitliche Gradient (46) einen Gradienten-Grenzwert betragsmäßig übersteigt.

8. Betriebsverfahren (100) nach einem der Ansprüche 1 bis 7 **dadurch gekennzeichnet, dass** während einer selbsttätigen Reinigung der Trennvorrichtung (12) eine Testmessung (52) mit einer Stoffprobe (15) durchgeführt wird um zumindest einen Trennleistungsparameter (36, 37) zu ermitteln.

9. Betriebsverfahren (100) nach einem der Ansprüche 1 bis 8, **dadurch gekennzeichnet, dass** die selbsttätige Reinigung gemäß Schritt d) durchgeführt wird, bis ein festes Reinigungsprogramm abgeschlossen ist oder zumindest einer der Trennleistungsparameter (36, 37) wieder seinem korrespondierenden Referenzwert (38, 39) entspricht.

10. Betriebsverfahren (100) nach einem der Ansprüche 1 bis 9, **dadurch gekennzeichnet, dass** zumindest die Schritte b) und c) auch für einen zweiten Trennleistungsparameter (36, 37) durchgeführt werden.

11. Computerprogrammprodukt (50) zum Steuern einer Gasanalysevorrichtung (10), das dazu ausgebildet ist, Messsignale von zumindest einem Detektor (30) zu verarbeiten und dazu ausgebildet ist, einer Auswertungseinheit (40) und/oder einem Detektor (30) der Gasanalysevorrichtung (10) zumindest einen Auswertungsparameter (51) vorzugeben, einen Schaltparameter der Gasanalysevorrichtung (10) vorzugeben, ein Steuersignal (45) an eine Trägergaszufuhr und/oder an ein Heizelement (18) der Gasanalysevorrichtung (10) auszugeben, **dadurch gekennzeichnet, dass** das Computerprogrammprodukt (50) dazu ausgebildet ist, zumindest eines der Betriebsverfahren (100) nach einem der Ansprüche 1 bis 10 umzusetzen.

12. Steuereinheit (40) für eine Gasanalysevorrichtung (10), die mit zumindest einem Detektor (30) der Gasanalysevorrichtung (10) mittelbar oder unmittelbar koppelbar ist, **dadurch gekennzeichnet, dass** auf der Steuereinheit (40) ein Computerprogrammprodukt (50) nach Anspruch 11 ausführbar gespeichert ist.

13. Gasanalysevorrichtung (10) zum Ermitteln einer Zusammensetzung einer Stoffprobe (15), umfassend eine Trennvorrichtung (12) und einen Detektor (30), **dadurch gekennzeichnet, dass** die Gasanalysevorrichtung (10) zum Durchführen eines Betriebsverfahrens (100) nach einem der Ansprüche 1 bis 10 ausgebildet ist.

14. Simulationsverfahren (200) zum Simulieren eines Betriebsverhaltens einer Gasanalysevorrichtung (10) mit einer Trennvorrichtung (12), umfassend die Schritte:
a) Bereitstellen eines Datensatzes zumindest eines Abschnitts der Gasanalysevorrichtung (10), durch den eine Funktionsweise der Trennvorrichtung (12) zumindest teilweise nachstellbar ist;
b) Vorgeben eines Betriebsparameters, durch den das zu simulierende Betriebsverhalten definiert ist;
c) Ausführen eines Simulationsprogrammprodukts (60), das dazu ausgebildet ist, anhand des Datensatzes aus Schritt a) und dem Betriebsparameter aus Schritt b) zumindest einen ersten Trennleistungsparameter (36, 37) der Trennvorrichtung (12) zu ermitteln;
d) Ausgeben des in Schritt c) ermittelten ersten Trennleistungsparameters (36, 37) an einen Benutzer und/oder eine Datenschnittstelle;
**dadurch gekennzeichnet, dass** die Gasanalysevorrichtung (10) nach Anspruch 13 ausgebildet ist.

15. Simulationsprogrammprodukt (60) zum Simulieren eines Betriebsverhaltens einer Gasanalysevorrichtung (10), **dadurch gekennzeichnet, dass** das Simulationsprogrammprodukt (6) dazu eingerichtet ist, ein Simulationsverfahren (2000) nach Anspruch 14 durchzuführen.
